# EUROPEAN PATENT APPLICATION

(11) **EP 2 801 337 A2**
(43) Date of publication of application: **12.11.2014**
(21) Application number: 13167439.2
(22) Date of filing: 13.05.2013
(51) Int. Cl.: A61C 8/00, A61C 13/00

(54) **Measurement system**

(30) Priority: 07.05.2013 TR 201305447
(71) Applicant: Serce, Ibrahim, Izmir (TR)
(72) Inventor: Serce, Ibrahim, Izmir (TR)
(74) Representative: Cayli, Hülya

(57) **Abstract**

A measurement system (S) developed according to the present invention is suitable for use in dental implant applications, making use of an abutment (A) provided with a prefabricated implant connection (A1) and a gingival connection (A2) as well as a prosthetic tooth connection (A3) which is shaped during the treatment process, and of at least one implant fixed to the jawbone to constitute the tooth root of the prosthetic tooth, said measurement system comprising at least two healing apparatuses (1) of the same structure, at least one thereof being suitable for use in a production system (S1) and at least one thereof being suitable for attachment to the implant after the implant is placed in the mouth of the patient in order to provide the healing of the gingiva, as well as at least one measurement apparatus (2) which, after being fastened to said healing apparatuses, is suitable both for making measurements for a prosthetic tooth to be produced, and for use in the production of the prosthetic tooth according to the measurements made.

## Description

### Field of Invention

The present invention relates to a measurement system used in dental implant applications.

### Prior Art

Tooth implant treatment is a process in which a prosthetic tooth is fixed in place of a missing tooth in the mouth. In a tooth implant treatment, preferably an implant in the form of a screw is fixed to the jawbone, wherein at least one tooth prosthesis is fixed to this implant by means of an intermediary part called as an abutment. A healing apparatus attached to the implant for providing a safe healing for the gingival tissues without giving rise to any complication is employed in the healing process of the affected gingival tissues at the site of implant once the implant is fixed to the jawbone of the respective patient in the progress of the treatment. The gingiva heals in compliance with the surface of the healing apparatus which comes in contact with the gingival tissues. During the healing process of the gingiva, a measurement is made to determine the mouth-jaw structure of the respective patient and the position of the implant in the mouth in order to produce the prosthetic tooth and to mill the abutment which will bind the prosthetic tooth to the implant. During this measurement process, the healing piece fastened to the implant is removed, and is replaced with a measurement apparatus. The measurement process is carried out using the methods according to the prior art (said method can be such methods as a digital scanning method, an embodiment of which is described in the patent document US2012322025 , or a method where a measurement apparatus is coated with a silicon-like material using a spoon or a spatula or a similar device) by means of this measurement apparatus. Then the measurement apparatus is removed and the healing apparatus is fastened back. Therefore, in order to carry out the production and pre-milling operations during and after the measurement process, the healing apparatus in the mouth of the respective patient should be removed and then placed back. The patient suffers pain during this process and this, in turn, leads to a prolongation of the implant treatment and to an increase in the costs. On the other hand, the compatibility of an abutment to the jaw structure of a patient is an important factor in terms of patient comfort.

### Brief Description of Invention

A measurement system developed according to the present invention is suitable for use in dental implant applications, making use of an abutment provided with a prefabricated implant connection and a gingival connection as well as a prosthetic tooth connection which is shaped during the treatment process, and of at least one implant fixed to the jawbone to constitute the tooth root of the prosthetic tooth, said measurement system comprising at least two healing apparatuses of the same structure, at least one thereof being suitable for use in a production system and at least one thereof being suitable for attachment to the implant after the implant is placed in the mouth of the patient in order to provide the healing of the gingiva, as well as at least one measurement apparatus which, after being attached to said healing apparatuses, is suitable both for making measurements for a prosthetic tooth to be produced, and for use in the production of the prosthetic tooth according to the measurements made.

By virtue of using at least two healing apparatuses of the same structure in the system according to the present invention, it becomes possible to reduce the painful period which a patient experiences during the implant treatment. Additionally, since the implant connection and the gingival connection of an abutment to be used are produced beforehand, only a prosthetic tooth shaping operation is performed during the production and treatment process, such that the production period is reduced and the production costs are decreased.

### Object of Invention

The object of the present invention is to develop a measurement system suitable for use in dental implant applications.

Another object of the present invention is to develop a measurement system which reduces the painful period experienced by a patient during the measurements.

A further object of the present invention is to develop a measurement system which reduces the error margin during the measurements.

Another object of the present invention is to develop a measurement system which makes it possible to completely set an abutment into the gingiva used in implant applications.

A further object of the present invention is to develop a measurement system which both reduces the time period and decreases the costs of a dental implant treatment.

### Description of Figures

Illustrative embodiments of the measurement system developed according to the present invention are illustrated in the accompanying figures briefly described hereunder.
Figure 1 is a front perspective view of an embodiment of the system according to the present invention.
Figure 2 is a side perspective view of a system according to the present invention.
Figure 3 is a perspective view of a healing apparatus comprised by the system according to the present invention.
Figure 4 is a side view of the healing apparatus according to the present invention.
Figure 5 is a side cross-sectional view of the healing apparatus according to the present invention.
Figure 6 is a side perspective view of a measurement apparatus comprised by the system according to the present invention.
Figure 7 is a bottom perspective view of the measurement apparatus comprised by the system according to the present invention.

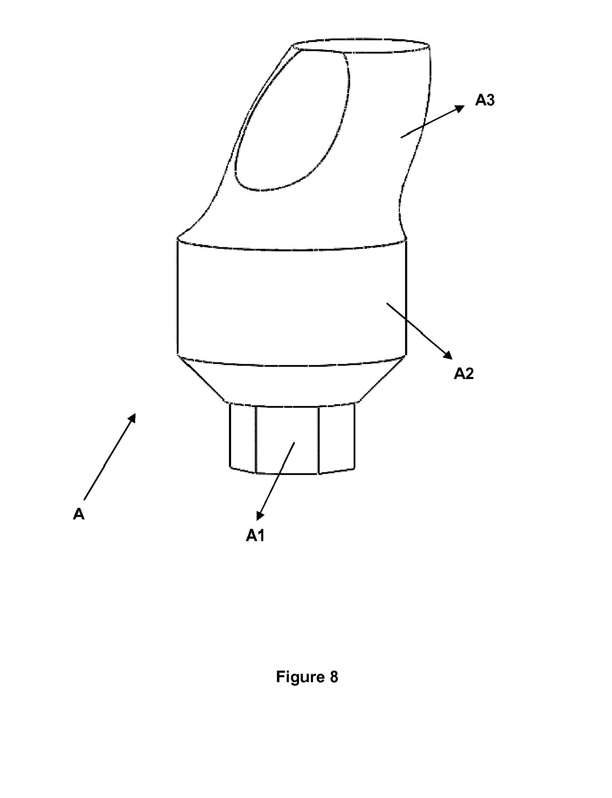

Figure 8 is a perspective view of an abutment to be fixed to a patient using the system according to the present invention.

The components in said figures are individually referenced as following.

| | |
|---|---|
| Measurement system | (S) |
| Production system | (S1) |
| Abutment | (A) |
| Implant connection | (A1) |
| Gingival connection | (A2) |
| Prosthetic tooth connection | (A3) |
| Healing apparatus | (1) |
| Body | (1a) |
| Mounting piece | (1b) |
| First connection section | (1c) |
| First socket | (1d) |
| Setting region | (1e) |
| Measurement apparatus | (2) |
| Dimensioning body | (2a) |
| Second connection section | (2b) |
| Cutout | (2c) |
| Direction identifier | (2d) |
| Second socket | (2e) |
| First screw | (3a) |
| Second screw | (3b) |
| Third screw | (3c) |

### Description of Invention

In a tooth implant treatment, an implant in the form of a screw is fixed to the jawbone and at least one tooth prosthesis is fixed to this implant. A support element called as an abutment is used to fix the tooth prosthesis to the implant. A healing apparatus attached to the implant for providing a safe healing for the gingival tissues without giving rise to any complication is employed in the healing process of the affected gingival tissues at the site of implant once the implant is fixed to the jawbone of the respective patient in the progress of the treatment (at the same time, the gingiva heals in compliance with the surface of the healing apparatus which comes in contact with the gingiva). Additionally, in order to make a prosthetic tooth and an abutment to be produced compliant with the mouth-jaw structure of the respective patient, a measurement apparatus is used for measuring the mouth-jaw structure of the patient. This measurement apparatus is set in place of the healing apparatus after the latter is removed from the implant disposed in the mouth of the patient and the measurement step is made accordingly. Then the measurement apparatus is removed and the healing apparatus is placed back in the mouth. When the production is to be made according to the measurements, the measurement apparatus is placed in a production device, so that the prosthetic tooth is produced and a milling operation is performed for the abutment in compliance with the gingival structure of the respective patient. In this process, however, removing the healing apparatus from the mouth of the patient and then placing it back gives rise to a painful process in terms of the patients.

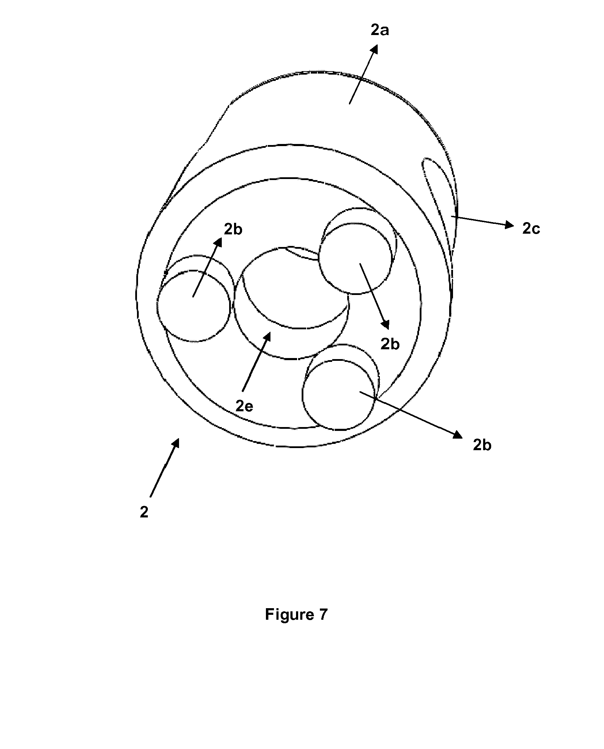

In general terms, an abutment (A) illustrated in Figure 7 comprises an implant connection (A1) to be fixed to an implant, a gingival connection (A2) contacting the gingiva, and a prosthetic tooth connection (A3) on which the prosthetic tooth is fixed. The parts of an abutment (A) fixed to an implant do generally have a standard structure (preferably a polygonal structure). The prosthetic tooth connection (A3) of the abutment (A), in turn, is shaped in compliance with the prosthetic tooth and the mouth-jaw structure of the respective patient. On the other hand, the compliance of the gingival connection (A2) of the abutment (A) to the gingiva is an important criterion in terms of the comfort and hygiene of the patient and the success of the implant.

In this context, a measurement system is developed which both reduces the time required for the implant treatment and the pain that a patient suffers, and enhances the comfort of the patient by providing a flawless placement of the prosthetic tooth in terms of the mouth-jaw structure of the patient.

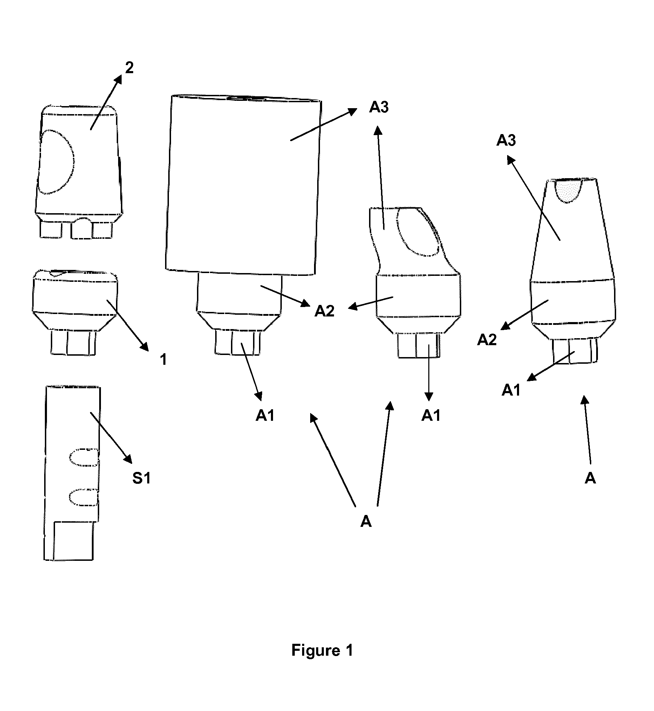

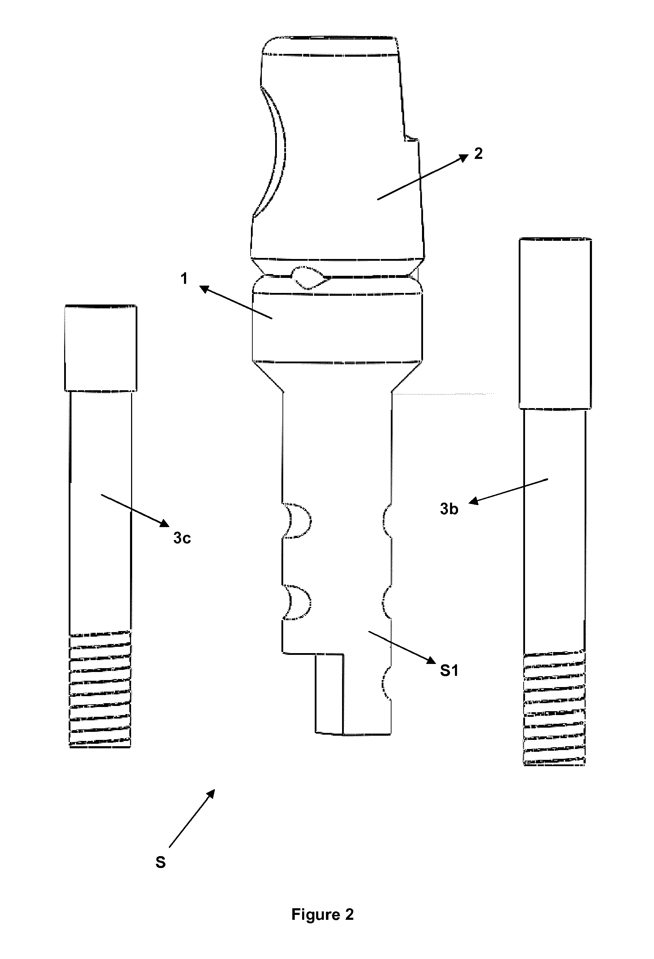

The measurement system (S) illustrated in figures 1 and 2 comprises at least two healing apparatuses (1) of the same structure, at least one thereof being suitable for use in a production system (S1) (e.g. in a plaster analog) and at least one thereof being suitable for attachment to an implant after the implant is placed to the mouth of the patient in order to provide the healing of the gingiva, as well as at least one measurement apparatus (2) which, after being fastened to said healing apparatuses (1), is suitable both for making measurements for a prosthetic tooth to be produced, and for use in the production of the prosthetic tooth according to the measurements made. Concerning the application of the system (S) according to the present invention, after the implant is placed to the mouth of the patient by a surgical operation, one of the healing apparatuses (1) is fastened to the implant in the mouth of the patient, such that the gingiva heals in compliance with the structure of this healing apparatus (1) following the surgical operation. Then in the measurement step, the measurement apparatus (2) is fastened to the healing apparatus (1) which was already fastened to the implant, such that a measurement can be made for a prosthetic tooth to be produced. This measurement step can either be carried out using a material (e.g. a silicon-based material) applied over the measurement apparatus (2), or by means of a digital scanning method. Then the measurement apparatus (2) is removed from the measurement apparatus (1), is fastened to the other healing apparatus (1) which is fastened to a production system (S1) in which the prosthetic tooth is to be produced, and a model is generated based on the measurements made and the prosthetic tooth is produced accordingly. Since the healing apparatuses (1) have the same structure, the prosthetic tooth production can be performed with a reduced error margin according to the measurements made using the measurement apparatus (2). Additionally, the need to remove the healing apparatus (1) from the mouth is eliminated during the healing process of the gingiva, and accordingly, the painful time period suffered by the respective patient is shortened.

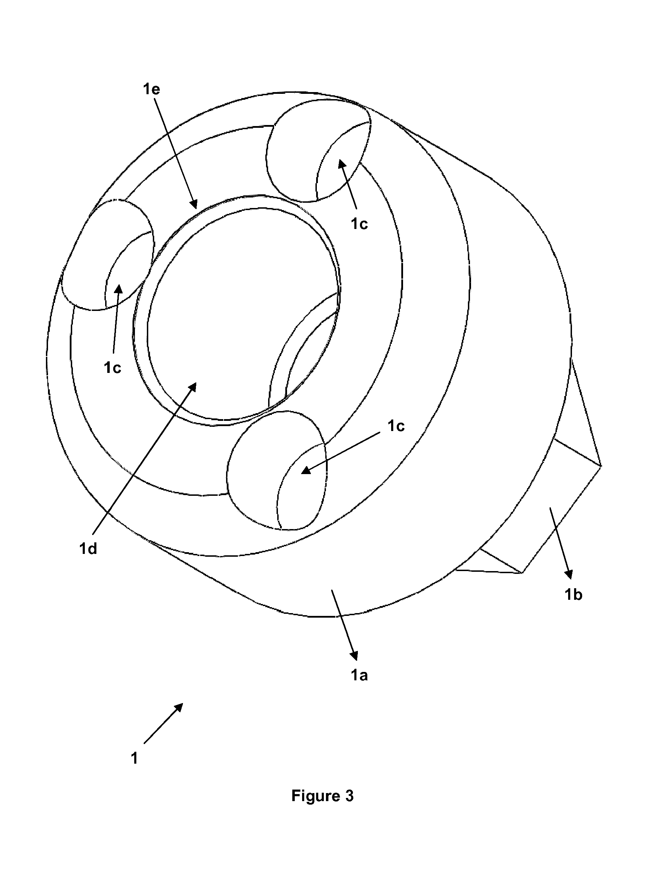

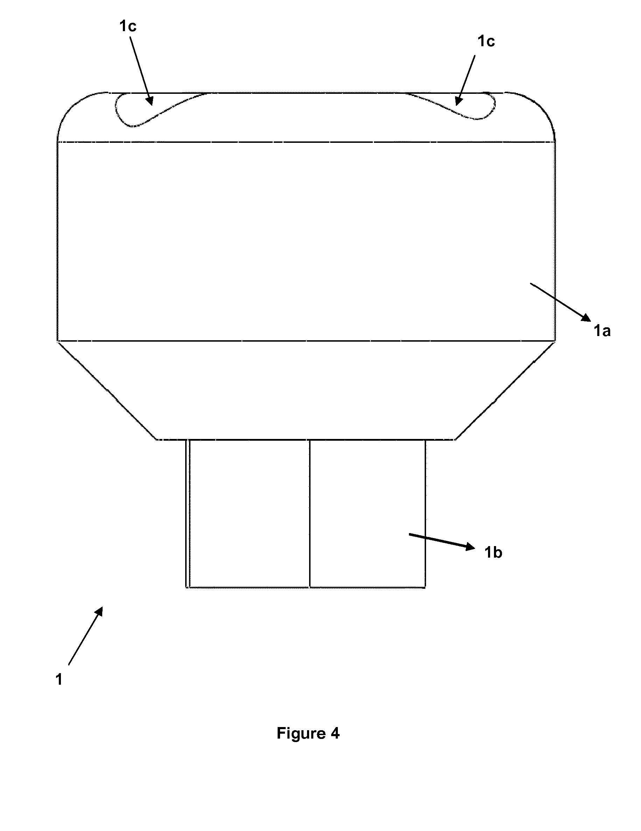

In a representative embodiment of the present invention as shown in figures 2-4, the healing apparatuses (1) comprised by the system (S) according to the present invention comprises at least one body (1a) by which the gingiva of the patient heals in compliance with and which has the same structure with the gingival connection (A2) of the abutment (A) to be used in the treatment of the patient; at least one mounting piece (1 b) preferably in the form of a polygon for fastening said apparatus (1) to the implant and to the production system (S1); and at least one first connection section (1c) for fastening the measurement apparatus (2) to the healing apparatus (1). Said connection section (1c) may either be in the form of a socket, or in the form of a protrusion suitable for placement into a socket. Since the body (1 a) comprised by the healing apparatus (1) and the gingival connection (A2) of the abutment (A) used in the implant treatment have the same structure, the implant connection (A1) and the gingival connection (A2) of an unprocessed abutment can be prefabricated. Thus, by virtue of using the system (S) according to the present invention, it becomes sufficient for a dentist carrying out the treatment, a laboratory, and/or an infrastructure center only to process the prosthetic tooth connection (A3) of the abutment (A) in compliance with the prosthetic tooth to be fixed and with the mouth structure of the patient, and therefore both the production process and the treatment process can be shortened.

According to another embodiment, the system (S) according to the present invention comprises at least one first screw (3a) for fixing said healing apparatus (1) to the implant and to the production system (S1), whereas the healing apparatuses (1) comprise at least one first socket (1d) preferably extending along the apparatus (1) and suitable for the placement of said screw (3a). Said screw (3a) comprises at least two regions which have different cross-sectional areas and make a stepwise connection to each other, wherein said socket (1d) has a structure which enables an exact placement of these regions. Additionally, a placement region (1e) having a width which becomes smaller towards the inside is disposed preferably at the section of said socket (1d) facing the oral cavity of the patient, wherein the head section of the screw (3a) is placed to this region without leaving any gaps. Thus, any food pieces or particles eaten by the respective patient are prevented from entering into the healing apparatus (1) while the gingiva heals, and any complications which may occur here are avoided.

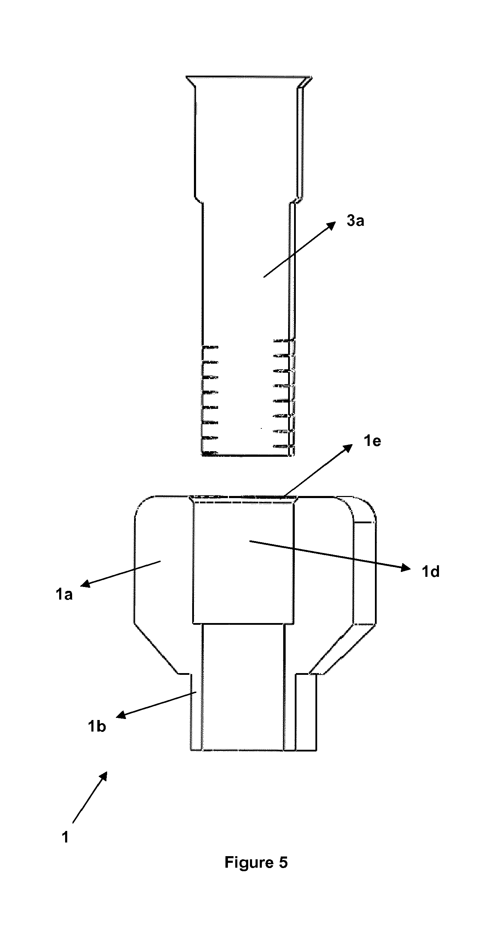

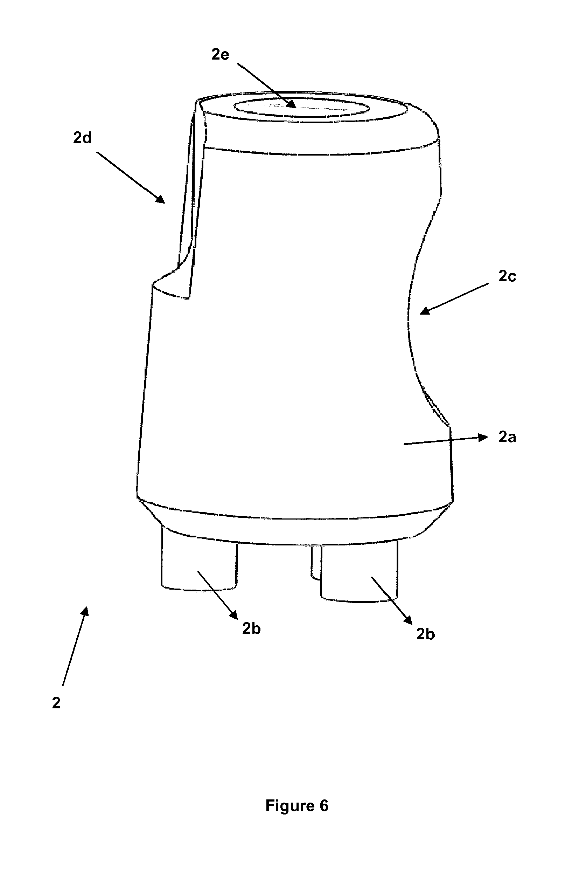

The measurement apparatus (2) comprised by the system (S) according to the present invention of which one representative embodiment is illustrated in figures 5-6 comprises at least one measurement body (2a); at least one second connection section (2b) having a structure in compliance with the first connection section (1c) disposed on said healing apparatus (1) and being connected to this first connection section (1c) to provide the connection of the measurement apparatus (2) to the healing apparatus (1); and at least one direction identifier (2d) ensuring a correct production of the prosthetic tooth according to the measurements made and being preferably disposed on the measurement body (2a). Said second connection section (2b) may have a socket form or a protrusion form in compliance with the structure of the first connection section (1 c) (e.g. if the first connection section (1c) has a socket shape, the second connection section (2b) is made in the form of a protrusion suitable to be placed into this socket).

According to a further embodiment, the system (S) according to the present invention preferably comprises at least one second screw (3b) for fixing said measurement apparatus (2) to the healing apparatus (1) fastened to the implant, whereas the measurement apparatuses (2) comprise at least one second socket (2e) preferably extending along the apparatus (2) and suitable for the placement of said screw (3b). The length of this second screw (3b) is defined so as to cover the section of the second socket (2e) which faces the oral cavity, so that when e.g. a silicon-based material is used during the measurement step, this material is prevented from filling the interior of the measurement apparatus (2). Additionally, the system (S) according to the present invention preferably comprises at least one third screw (3c) for fixing said measurement apparatus (2) to the healing apparatus (1) fastened to the production system (S1), wherein this third screw (3c) is placed to the second socket (2e). The length of the third screw (3c) is preferably smaller than the length of the second screw (3b).

In an alternative embodiment according to the present invention, the measurement apparatus (2) comprises at least one cutout (2c) preferably disposed on the measurement body (2a). According to this embodiment, when a material is used that covers the measurement body (2a) during a measurement process, the material is guided to this cutout (2c) so that the measurement apparatus (2) can be prevented from being displaced in this material. Thus, the measurement process can be performed with a lowered error margin.

By virtue of using at least two healing apparatuses (1) of the same structure in the system (S) according to the present invention, it becomes possible to reduce the painful period which a patient experiences during the implant treatment. Additionally, since the implant connection (A1) and the gingival connection (A2) of an abutment (A) to be used is produced beforehand, only a prosthetic tooth shaping operation is performed during the production and treatment process, such that the production period is shortened and the production costs are decreased.

## Claims

1. A measurement system (S) suitable for use in dental implant applications, making use of an abutment (A) provided with a prefabricated implant connection (A1) and a gingival connection (A2) as well as a prosthetic tooth connection (A3) which is shaped during the treatment process, and of at least one implant fixed to the jawbone to constitute the tooth root of the prosthetic tooth, **characterized by** comprising at least two healing apparatuses (1) of the same structure, at least one thereof being suitable for use in a production system (S1) and at least one thereof being suitable for attachment to the implant after the implant is placed to the mouth of the patient in order to provide the healing of the gingiva, as well as at least one measurement apparatus (2) which, after being fastened to said healing apparatuses (1), is suitable both for making measurements for a prosthetic tooth to be produced, and for use in the production of the prosthetic tooth according to the measurements made.

2. The measurement system (S) according to Claim 1, **characterized in that** said healing apparatuses (1) comprise at least one body (1 a) with which the gingiva of the patient heals in compliance and which has the same structure with the gingival connection (A2) of the abutment (A); at least one mounting piece (1 b) for fastening said apparatus (1) to the implant and to the production system (S1); and at least one first connection section (1 c) for fastening the measurement apparatus (2) to the healing apparatus (1).

3. The measurement system (S) according to Claim 2, **characterized in that** said mounting piece (1 b) has a polygonal form.

4. The measurement system (S) according to Claim 2, **characterized in that** said connection piece (1 c) has a socket form.

5. The measurement system (S) according to Claim 2, **characterized in that** said connection piece (1c) is in the form of a protrusion which is suitable for placement into a socket.

6. The measurement system (S) according to Claim 1, **characterized by** comprising at least one first screw (3a) for fastening said healing apparatus (1) to the implant and to the production system (S1).

7. The measurement system (S) according to Claim 6, **characterized in that** said healing apparatuses (1) comprise at least one first socket (1d) suitable for the placement of said screw (3a).

8. The measurement system (S) according to Claim 7, **characterized in that** said socket (1d) has a structure which extends along the apparatus (1).

9. The measurement system (S) according to Claim 7, **characterized in that** said screw (3a) comprises at least two regions which have different cross-sectional areas and make a stepwise connection to each other.

10. The measurement system (S) according to any of the claims 7 to 9, **characterized by** comprising at least one placement region (1e) with a width becoming smaller towards the inside, said region being disposed at the section of said socket (1d) facing the oral cavity of the patient, and the head section of the screw (3a) being placed thereto without leaving any gaps.

11. The measurement system (S) according to Claim 2, **characterized in that** the measurement apparatus (2) comprises at least one measurement body (2a); at least one second connection section (2b) having a structure in compliance with the first connection section (1c) disposed on said healing apparatus (1a) and being connected to this first connection section (1c) to provide the connection of the measurement apparatus (2) to the healing apparatus (1); and at least one direction identifier (2d) ensuring a correct production of the prosthetic tooth according to the measurements made and being preferably disposed on the measurement body (2a).

12. The measurement system (S) according to Claim 11, **characterized in that** said second connection section (2b) has a socket form in compliance with the structure of the first connection section (1c).

13. The measurement system (S) according to Claim 11, **characterized in that** said second connection section (2b) is in the form of a protrusion in compliance with the structure of the first connection section (1c).

14. The measurement system (S) according to Claim 1, **characterized by** comprising at least one second screw (3b) for fixing said measurement apparatus (2) to the healing apparatus (1) fastened to the implant, and at least one second socket (2e) disposed on the measurement apparatus (2) and being suitable for the placement of said screw (3b).

15. The measurement system (S) according to Claim 14, **characterized by** comprising at least one third screw (3c) placed to said second socket (2e) for fixing said measurement apparatus (2) to the healing apparatus (1) fastened to the production system (S1).

16. The measurement system (S) according to Claim 15, **characterized in that** the length of the third screw (3c) is smaller than the length of the second screw (3b).

17. The measurement system (S) according to Claim 1, comprising at least one cutout (2c) disposed on the measurement apparatus (2).
